**Europäisches Patentamt**

**European Patent Office**

**Office européen des brevets**

(11) Publication number: **0 126 884**
**B1**

# EUROPEAN PATENT SPECIFICATION

(45) Date of publication of patent specification: **11.11.87**

(21) Application number: **84103281.6**

(22) Date of filing: **26.03.84**

(51) Int. Cl.⁴: **G 11 B 23/02, G 11 B 23/50, G 11 B 23/40, G 11 B 17/02**

(54) **Magnetic recording disk cartridge.**

(30) Priority: **23.05.83 US 497322**

(43) Date of publication of application:
**05.12.84 Bulletin 84/49**

(45) Publication of the grant of the patent:
**11.11.87 Bulletin 87/46**

(84) Designated Contracting States:
**DE FR GB**

(56) References cited:
**EP-A-0 086 395**
**EP-A-0 097 221**
**DE-A-2 717 689**
**FR-A-2 191 189**
**US-A-3 416 150**
**US-A-3 860 248**
**US-A-4 352 175**

**PATENTS ABSTRACTS OF JAPAN, vol. 6, no. 145 (P-132)1023r, 4th August 1982; & JP - A - 57 64 380 (RICOH K.K.) 19-04-1982**

(73) Proprietor: **International Business Machines Corporation**
**Old Orchard Road**
**Armonk, N.Y. 10504 (US)**

(72) Inventor: **Bartholet, Michael Alan**
**900C W. Moorhead Cr.**
**Boulder Colorado 80303 (US)**
Inventor: **Prahl, Marvin Edward**
**6635 Cherokee Court**
**Longmont Colorado 80501 (US)**

(74) Representative: **Colas, Alain**
**Compagnie IBM France Département de Propriété Intellectuelle**
**F-06610 La Gaude (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### Technical field

This invention relates to the field of dynamic magnetic information storage or retrieval, and more specifically to a disk cartridge comprising a a rigid plastic jacket which houses and protects a flexible magnetic recording (floppy) disk.

### Background of the Invention

The use of a floppy disk as rotating magnetic recording media is well known. More specifically, a single disk is permanently encased in a protective jacket. The disk rotates within the jacket, as the jacket is held stationary within a disk drive.

The present invention is an improvement upon EP—A—97221 filed 25.2.83 and published 4.1.84. More specifically, the present invention provides reversible or two-sided use of the cartridge of this document.

Reversibility of a floppy cartridge, to thereby enable read/write of a selected side of the disk, has been addressed in the prior art.

US—A—3,932,895 shows a square, flexible-jacket diskette having optical-detector holes which are offset symmetrically to opposite sides of a jacket axis along which the jacket's head access openings are placed. Thus, when the jacket is flipped 180° about this axis, the other side's head access opening and the other side's detector hole is properly positioned in the disk drive. In this arrangement, the head access openings run perpendicular to an edge of the cartridge. In one embodiment, the jacket's leading edge (the edge which first enters the disk drive) includes two write-enable cutouts. In this way, one of the cutouts is always in the correct position, for either flipped positions of the diskette.

The prior art also teaches single-sided diskettes having a head access opening located along a diagonal axis (i.e. an axis connecting the diskette corners) of a square diskette. US—A—3,416,150 and US—A—3,845,502 are exemplary. Both of these patents teach positioning or locating openings are formed in the diskette. In US—A—3,845,502 the locating openings are formed at the two trailing corners of the diskette; whereas, in US—A—3,416,150 the locating openings are formed along the diagonal axis which includes the head access opening. In both patents, the diskette includes a rigid jacket.

Aforesaid EP—A—97221 discloses a square, single-sided, rigid-jacket diskette having a head access opening located along a diagonal axis. The jacket's leading edge includes locating openings or notches at the two leading corners of the diskette. A movable, rigid cleaning pad is provided on one side of the jacket. This pad lies along the aforesaid diagonal axis, but it is located adjacent the corner of the jacket opposite the head access opening. One leading corner includes a polarizing taper which insures that the diskette can be inserted into the drive in only one position; for example, the taper must be located at the left corner of the diskette's leading edge, as the diskette is held in a horizontal plane.

### Summary of the Invention

The present invention provides an improvement of the aforesaid European application by a construction and arrangement whereby the disk within the diskette cartridge or housing is a two-sided disk; and the housing includes two oppositely-aligned head access openings, and two oppositely-aligned disk cleaning members; thus doubling the data which is contained on the disk.

More specifically, the diskette of the present invention is constructed and arranged to be symmetrical about a diagonal axis of the diskette; and specifically, about the diagonal axis on which the diskette's head access opening and cleaning member are located.

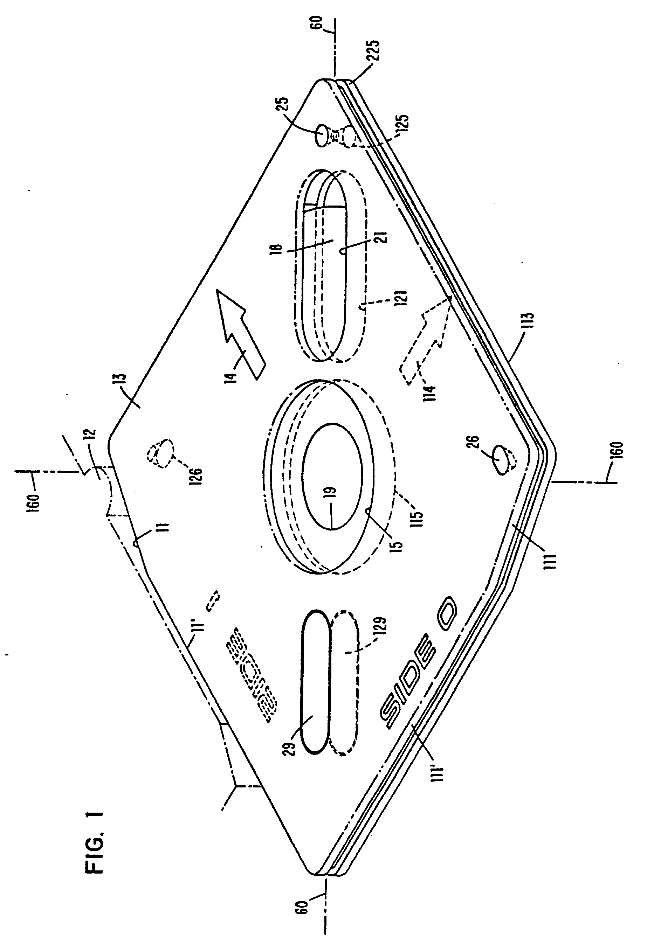

Thus, the diskette of this invention can be oriented for use of a selected side of the disk merely by rotating the diskette 180° about this diagonal axis (axis 60 of Fig. 1).

A further feature of the present invention provides diskette insertion indicia (arrows 14 and 114 of Fig. 1), one of which is located on each side of the diskette. These arrows are located at 90°, to thereby point in the proper direction only when the diskette has been properly rotated, as the user changes from using one side to using the other side of the disk.

The two edges of the diskette which meet at the 90° corner adjacent the head access opening (corner 225 of Fig. 1) also carry diskette locating notches or recess pairs (25 and 125 of Fig. 1) which operate to properly locate the diskette within a disk drive.

The two opposite corners of the diskette which lie on the diskette's orthogonal axis (160 of Fig. 1) carry polarizing means, in the form of tapered edges (11 and 111), which operate to prevent the diskette from being inserted into the disk drive in other than one of its two rotated attitudes.

These two opposite corners also carry locating notches (26 and 126) which are selectively operable as the diskette is rotated for use of one side or the other of the disk.

The foregoing and other features and advantages of the invention will be apparent from the following more particular description of a preferred embodiment of the invention, as illustrated in the accompanying drawing.

### Brief Description of the Drawing

Fig. 1 is a top view of the rigid magnetic recording disk cartridge of the present invention, with "side 0" oriented for use;

Fig. 2 shows Fig. 1's cartridge prior to insertion in an exemplary flexible disk drive, after the cartridge has been rotated 180° about rotation axis 60, to thus present "side 1" for use; and

Fig. 3 shows the cartridge of the present invention contained within a protective sleeve, ready for storage.

## Description of the Preferred Embodiment

The rigid magnetic recording disk cartridge (diskette) of the present invention includes a rigid plastic envelope, preferably formed of an opaque polycarbonate. The cartridge is about 0.5 cm thick and 10 cm square. A top view is seen in Fig. 1, although the designation top and bottom are arbitrary since the cartridge can be used with its flat plane oriented in any direction.

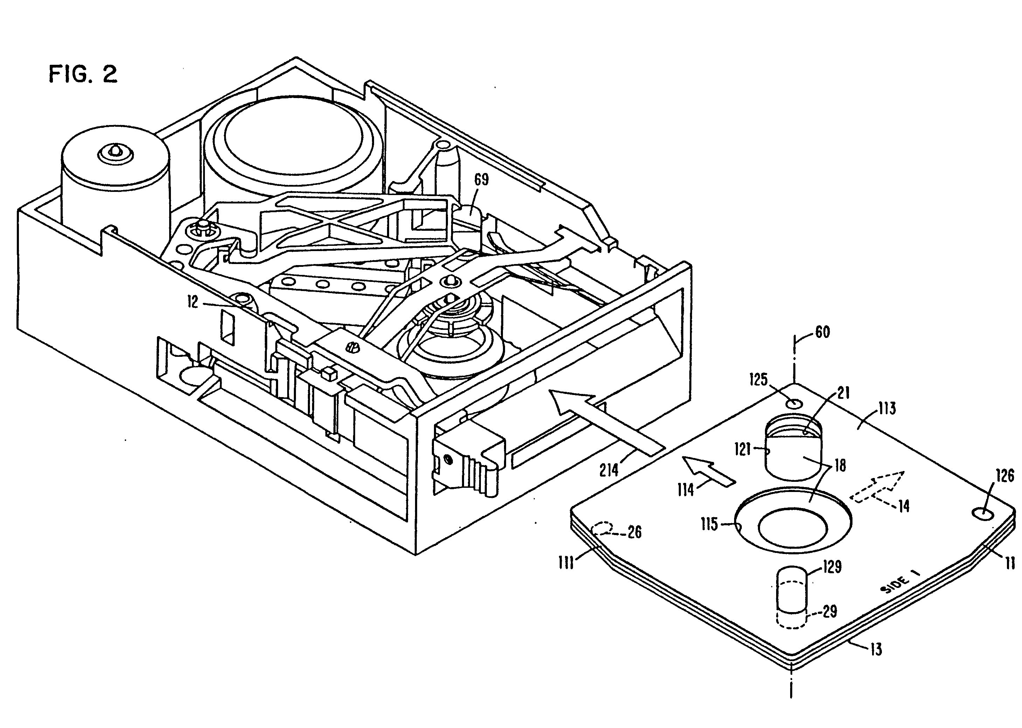

Cartridge 10 is essentially square, with the exception of tapered boundary edges 11 and 111. Edges 11 and 111 are tapered at about 15° to sides 11′ and 111′ of the cartridge. These two tapered edges are constructed and arranged to cooperate with a stationary wall portion 12 of the disk drive (Fig. 2) with which the cartridge is used. Edges 11 and 111, and wall portion 12, cooperate so that the cartridge cannot be incorrectly inserted in the drive, as the cartridge is manually inserted in direction 214 (Fig. 2). Arrow 14 is visible indicia carried by the cartridge. The underside of the cartridge carries similar indicia 114. Both indicia visually indicate the direction of cartridge insertion, when the cartridge is rotated 180° about its diagonal rotation axis 60.

Each wall 13, 113 of the cartridge also includes a usage-indicia label — "side 0" and "side 1", respectively. Each one of these indicia is paired with one of the insertion indicia 14, 114. That is, when the user wishes to use "side 0", the cartridge is flipped (about axis 60) such that indicia 14 indicates the direction of insertion (214 of Fig. 2) into the disk drive. Conversely, when "side 1" is to be used, indicia 114 is operable to indicate the direction of insertion, as shown in Fig. 2. Whatever side is in use, only the usage indicia ("side 1" of Fig. 2) associated with the operative insertion indicia (114 of Fig. 2) is viewable by the operator, once the cartridge has been fully inserted into the disk drive.

Each of the cartridge's flat, parallel walls 13 and 113 carries locating means in the form of notch pairs 25, 26 and 125, 126. These notches operate to properly locate the cartridge within the disk drive of Fig. 2. When the cartridge is oriented as shown in Fig. 1, pair 125, 126 is operative. When the cartridge is oriented as shown in Fig. 2, pair 25, 26 is operative. Each pair of notches includes a cone shaped notch 25, 125, whose apexes are oppositely aligned. As an alternative, the apexes of notches 25 and 125, may be symmetrically offset on opposite sides of axis 60, such that they occupy and exchange the same location in space, as the cartridge is rotated 180° about axis 60. These notches are located on rotation axis 60, at a first corner 225 of the cartridge.

Notches 26 and 126 are located in walls 13 and 113, respectively. Each of these notches comprises an elongated tapered recess whose axes of elongation, when extended, cross near corner 225. More specifically, these axes of elongation cross at the apex of cones 25, 125. In the aforesaid alternative construction (i.e., when the apexes of notches 25 and 125 are not aligned), the axis of elongation of notch 126 crosses the apex of notch 125, and the axis of elongation of notch 26 crosses the apex of notch 25. Each of the tapered recesses 26, 126 is located approximately on the cartridge's orthogonal axis 160, adjacent polarizing means or tapered edges 111 and 11, respectively.

The disk drive of Fig. 2 includes two stationary, tapered pins which mate with cartridge notches 125, 126 (when cartridge "side 0" is to be used by the disk drive). Elongation of notch 126 allows sidewise movement of the cartridge, along the axis of elongation of notch 126, as a disk-drive-pin seats in notch 125.

The cartridge's flat top wall 13 and flat bottom wall 113 both include centrally located, circular, oppositely-aligned apertures 15, 115. These two apertures receive the disk drive's stationary but rotatable spindle and movable collet. A flexible magnetic recording disk 18 of the well known "floppy" type is loosely captured within the cartridge's inner cavity. This disk is of thin, flexible magnetic recording media, and includes a central, circular, mounting aperture 19 whose peripheral boundary is clamped to the disk drive's collet/spindle mechanism. When so clamped, the disk's circular data tracks are concentric with the central axis of aligned apertures 15, 115; and the disk spins about this axis, as the disk assumes a flat spin-plane perpendicular to this axis, and parallel to the two sides 13, 113 of the cartridge housing.

The cartridge's two opposing walls 13 and 113 include oppositely-aligned, elongated openings or head-access slots 21 and 121, respectively, which are located on the aforesaid diagonal axis 60. These slots enable the disk drive's magnetic head to obtain access to one side (Fig. 1) or the other side (Fig. 2) of the disk. As seen in Fig. 2, a felt-like pressure pad 69 enters the unused one of apertures 21, 121, as the head enters the used one of these two apertures. In this way, the spinning disk is trapped between the disk drive's pad and head. Head backup pad 69 spans substantially the entire disk-radial distance of unused aperture 21, 121. The opposing head incrementally moves on the disk-radius of the used aperture 21, 121, as the pad remains stationary. This head/pad arrangement is described in US—A—4,315,289.

Pad 69 wipes the magnetic recording side of disk 18 which is currently not in use. Therefore, this pad must be made of a material which does not abrade or contaminate the disk's magnetic recording layer. A pad material such as felt is preferred.

The cartridge's two opposing walls 13 and 113 also include oppositely-aligned, movable, rigid housing pieces 29 and 129 which operate to clean the disk's two recording surfaces. These cleaning members are located on diagonal axis 60. More specifically, a movable push-rod, contained within the disk drive of Fig. 2, operates to push upward on member 129 when the cartridge is oriented as shown in Fig. 1, and to push upward on member 29 when the cartridge is oriented as shown in Fig. 2. As state in the aforesaid EP—A—97221, this cartridge includes internal cleaning means in the form of a wiping cloth liner.

The disk drive of Fig. 2 is more completely disclosed in EP—A—97221.

Cartridge slots 21 and 121 are about 1.5 cm wide and 3 cm long.

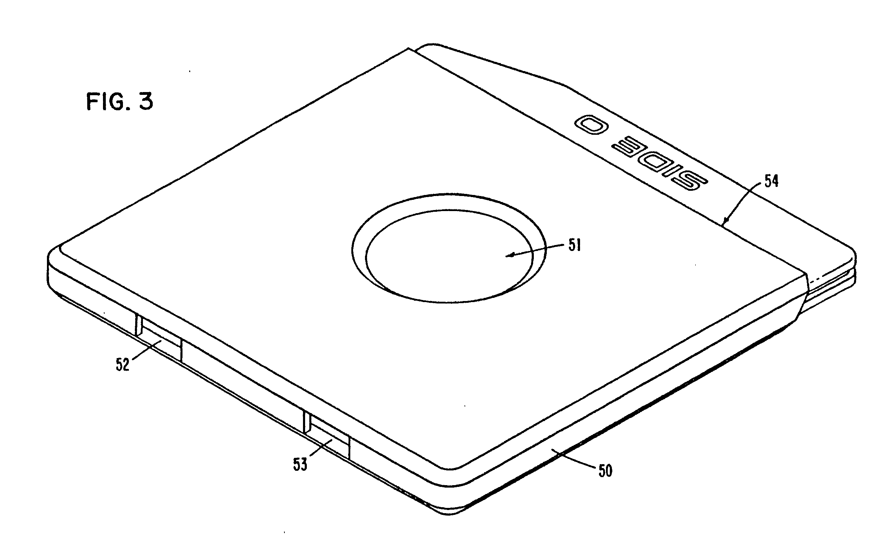

Fig. 3 shows the diskette ready for storage. As such, it has been inserted into an envelope or pouch 50 which is formed (blow molded) of a somewhat resilient plastic such as polyethylene. In this condition, disk 18 is totally enclosed and protected from physical contact, dust and the like. Pouch 50 includes a disk-shaped recess 51 which snaps into the opening 15 (or 115) of the diskette, thereby securing the diskette within the pouch. A pair of openings 52 and 53 allow air to evacuate out of the bottom of the pouch as the diskette is inserted into pouch opening 54.

## Claims

1. A diskette, adapted for use with a disk drive having head means which operates on one or the other, but not simultaneously on both sides of a double-sided floppy disk which is enclosed within a thin, flat, generally square housing, the housing and its internal disk constituting said diskette; said diskette comprising;

a pair of elongated and oppositely-aligned head-access openings (21, 121), one on each flat surface of said housing; said head-access openings being located on a diagonal axis (60) of said housing, and being spaced to one side of a centrally located disk-drive opening;

two-pair of diskette locating means (25, 26, 125, 126), one pair for each flat surface of said housing, first ones (25, 125) of each of said pair being symmetrically-aligned relative said axis adjacent a first corner of said housing which is adjacent said head accessing openings, second ones (26, 126) of each of said pair being symmetrically located at opposite corners of the housing's orthogonal axis, and on opposite flat surfaces of said housing;

a first and second orientation means (11, 111) carried by said housing, one at each of said opposite corners defined by said orthogonal axis;

whereby the disk may be oriented for use of one side or the other by rotating said housing 180° about said diagonal axis;

such that said first corner of said housing occupies the same position within a disk drive for each of the two rotated positions of said housing, and different ones of said operative corners occupy an operative position within the disk drive, for each of said two rotated positions.

2. The diskette of claim 1 further comprising a pair of oppositely-aligned movable housing member (29, 129), one in each flat surface of said housing; said movable housing members being located on said diagonal axis (60) and being spaced to the opposite side of said centrally located disk-drive opening, said movable housing members cooperating with disk cleaning means contained within said diskette.

3. The diskette according to claim 1 or 2 wherein said polarizing means comprise two tapered edges of said housing, said taper being located symmetrical relative said diagonal axis.

4. The diskette according to claim 1, 2 or 3 wherein said locating means comprise recesses formed in each of said flat surfaces.

5. The diskette of claim 4 wherein said first ones of each of said pair of locating means comprise cone-shaped recesses; and

wherein said second ones of each of said pair of locating means comprise elongated tapered recesses whose axis of elongation, when extended, cross adjacent said first corner of said housing.

6. The diskette of claim 5 wherein the extended axis of elongation of each of said second ones of said pair of locating means crosses the apex of its mating-side cone-shaped recess.

7. The diskette of claim 5 or 6 wherein said first ones of said pair of locating means are oppositely aligned and are located on said axis, and wherein the extension of said axis of elongation crosses at the common apex of said cone-shaped recesses.

8. The diskette according to any one of the preceding claims wherein said housing is formed of rigid plastic, and is about 10 cm square and about 0,05 cm thick.

9. The diskette according to any one of claims 3 to 8 wherein said two tapered edges form an acute angle of about 15° to the two edges of said housing which meet to form a 90° corner at said opposite side of said centrally located disk-drive opening.

10. The diskette according to any one of the preceding claims wherein each of said two flat surfaces of said housing includes indicia indicating proper direction of insertion into the disk drive, said indicia being oriented at 90° to each other and being directed toward the two edges of said housing which meet to form a 90° corner at said first corner of said housing.

11. The diskette of claim 10 wherein each of said two flat surfaces includes indicia indicating side of usage, said usage indicia being oriented at 90° to each other and being located on the opposite edge of said housing from its mating insertion indicia.

## Patentansprüche

1. Diskette, zur Verwendung auf ainer Platteneinheit angepasst, die mit einem Kopfmittel ausgerüstet ist, das die eine oder die andere Seite, aber nicht gleichzeitig beide Seiten einer flexiblen, in einen flachen, ebenen und im allgemeinen rechteckigen Gehäuse angeordneten Magnetplatte beschreibt bzw. abliest, wobei das Gehäuse und dessen innere Platte die genannte Diskette bilden und diese Diskette weiter dadurch gekennzeichnet ist, dass sie folgendes aufweist: ein Paar länglicher und gegenüberliegend ausgerichteter Öffnungen (21, 121), die dem Sensorkopt Zugang gewährleisten, und jeweils auf einer Seite der flachen Oberfläche des genannten Gehäuses liegen, wobei die genannten Kopfzugangsöffnungen auf einer diagonalen Achse (60) des genannten Gehäuses angeordnet sind und einen bestimmten Abstand bis zu einer Seite einer mittig gelegenen Öffnung für die Platteneinheit haben;

zwei Paare eines Diskette-Positioniermittels (25, 26, 125, 126), jeweils eins für jede ebene Oberfläche des genannten Gehäuses, wobei das erste (25, 125) der genannten Paare symmetrisch ausgerichtet ist im Verhältnis zur genannten Achse, neben einer ersten Ecke des genannten Gehäuses liegt und diese Ecke sich neben den genannten Zugangsöffnungen befindet, und das zweite (26, 126) der genannten Paare symmetrisch in der gegenüberliegende Ecke der rechtwinkligen Gehäuseachse und auf der gegenüberliegenden ebenen Oberfläche des genannten Gehäuses positioniert ist;

ein erstes und ein zweites, auf dem genannten Gehäuse vorgesehenes Orientierungsmittel (11, 111), jeweils in jeder der genannten gegenüber liegenden Ecken gelegen, die durch die genannte rechtwinklige Achse definiert werden;

wodurch die Platte zur Benutzung auf der einen oder der anderen Seite geeignet ist, indem das Gehäuse um 180° um die genannte diagonole Achse gedreht wird;

so dass die genannte erste Ecke des genannten Gehäuses für jede der gedrehten Positionen dieses Gehäuses dieselbe Stellung in der Platteneinheit einnimmt und jeweils andere der genannten gegenüberliegenden Ecken bei jede der gedrehten Positionen eine Funktionsstellung in der Platteneinheit einnehmen.

2. Diskette nach Anspruch 1, die weiter ein Paar von gegenüberliegend ausgerichteten beweglichen Gehäuseelementen (29, 129) aufweist, und zwar eins auf jeder ebenen Fläche des genannten Gehäuses, und die genannten beweglichen Gehäuseelemente auf der genannten diagonalen Achse (60) und in bestimmten Abstand von der entgegengesetzten Seite der genannten zentral gelegenen Platteneinheitsöffnung angeordnet sind, wobei die beweglichen Gehäuseelemente mit dem Plattenreinigungsmittel zusammenarbeiten, das sich in der Diskette befindet.

3. Diskette nach Anspruch 1 oder 2, bei der das genannte Orientierungsmittel aus zwei schrägliegenden Seiten des genannten Gehäuses besteht und diese beiden Schrägen symmetrisch im Verhältnis zur genannten diagonalen Achse angeordnet sind.

4. Diskette nach Anspruch 1, 2 oder 3, bei der die genannten Positioniermittel Aussparungen auf jeder der genannten ebenen Flächen aufweisen.

5. Diskette nach Anspruch 4, bei der jeweils das erste der genannten Positioniermittelpaare kegelförmige Aussparungen aufweist, und

jeweils das zweite der genannten Positioniermittelpaare längliche kegelförmige Aussparungen aufweist, deren Längsachse, wenn sie verlängert wird, die genannte benachbrte erste Ecke des Gehäuses kreuzen.

6. Diskette nach Anspruch 5, bei der die verlängerte Längsachse des jeweiligen zweiten der genannten Orientierungsmittelpaare den Scheitelpunkt der kegelförmigen Aussparung auf der Gegenseite kreuzt.

7. Diskette nach Anspruch 5 oder 6, bie der jeweils die ersten der genannten Orientierungsmittelpaare gegenüberliegend ausgerichtet sind und sich auf der genannten Achse befinden, wobei die Verlängerung der genannten Längsachse den gemeinsamen Scheitelpunkt der genannten kegelförmigen Aussparungen kreuzt.

8. Diskette nach allen der vorstehenden Ansprüche, bei der das genannte Gehäuse aus steifen Kunststoff besteht, ca. 10 cm im Quadrat erreicht und 0,05 cm dick ist.

9. Diskette nach den Ansprüchen 3 bis 8, bei der die beiden geknickten Seiten einen spitzen Winkel von ca. 15° bilden mit den beiden Seiten des Gehäuses, die sich auf der der genannten zentralen Platteneinheit-Öffnung gegenüberliegenden Seite in einem Winkel von 90° treffen.

10. Diskette nach allen der vorstehenden Ansprüche, bei der jede der beiden ebenen Flächen des genannten Gehäuses Anzeichen aufweist, aus welchen die richtige Einsetzrichtung hervorgeht, wobei diese Anzeichen rechtwinklig zueinander angeordnet sind und zu den beiden Seiten des genannten Gehäuses zeigen, die sich an der genannten ersten Ecke des genannten Gehäuses in einem Winkel von 90° zueinander treffen.

11. Diskette nach Anspruch 10, bei der jede der beiden ebenen Flächen Anzeichen aufweist, aus der die verwendete Seite hervorgeht, wobei diese Anzeichen rechtwinklig zueinander angeordnet sind und sich im Verhältnis zum Einsetzanzeichen auf der entgegengesetzten Seite des genannten Gehäuses befinden.

**Revendications**

1. Une disquette adaptée de façon à pouvoir être utilisée avec une unité d'entraînement de disques comportant des moyens à tête qui fonctionnent sur l'un ou l'autre côté d'un disque souple à deux côtés mais pas sur les deux côtés en même temps, qui est contenu dans une enveloppe mince, plate et généralement carrée, l'enveloppe et son disque intérieur constituant ladite disquette, ladite disquette comprenant:

une paire d'ouvertures d'accès de tête de forme allongée et alignées l'une par rapport à l'autre (21, 121), une ouverture étant ménagée dans chaque surface plate de ladite enveloppe, lesdites ouvertures d'accès de tête étant disposées sur un axe en diagonale (60) de ladite enveloppe et espacées d'un côté d'une ouverture d'entraînement de disque disposée centralement,

deux paires de moyens de positionnement de disquettes (25, 26, 125, 126), une paire pour chaque surface plate de ladite enveloppe, des premières (25, 125) de chacune de ladite paire étant symétriquement alignées par rapport audit axe adjacent à un premier coin de ladite enveloppe qui est adjacente auxdites ouvertures d'accès de tête, des secondes (26, 126) de chacune de ladite paire étant symétriquement situés aux coins opposés de l'axe orthogonal de l'enveloppe et sur les surfaces plates opposées de ladite enveloppe,

Un premier et un second moyens de positionnement (11, 111) portés par ladite enveloppe, un à chacun des coins opposés définis par ledit axe orthogonal,

ce qui permet le positionnement du disque pour l'utilisation de l'un de ses côtés ou de l'autre en tournant ladite enveloppe de 180° autour dudit axe en diagonale,

de façon que ledit premier coin de ladite enveloppe occupe la même position dans une unité d'entraînement de disques pour chacune des deux positions en rotation de ladite enveloppe, et que des coins différents desdits coins opposés occupent une position de fonctionnement dans l'unité d'entraînement de disques, pour chacune desdites deux positions en rotation.

2. La disquette de la revendication 1 comprenant en outre une paire d'éléments d'enveloppe mobiles et alignés de manière opposée (29, 129), un dans chaque surface plate de ladite enveloppe, lesdits éléments d'enveloppe mobiles étant disposés sur ledit axe en diagonale (60) et étant espacés du côté opposé de ladite ouverture d'entraînement de disques disposée centralement, lesdits éléments d'enveloppe mobiles coopérant avec des moyens de nettoyage de disques contenus dans ladite disquette.

3. La disquette selon la revendications 1 ou 2 dans laquelle lesdits moyens de positionnement comprennant deux bords coniques de ladite enveloppe, ladite conicité étant symétrique par rapport audit axe en diagonale.

4. La disquette selon la revendication 1, 2 ou 3 dans laquelle lesdits moyens de positionnement comprennent des évidements formés dans chacuns desdites surfaces plates.

5. La disquette de la revendication 4 dans laquelle lesdits premiers de chacun de ladite paire de moyens de positionnement comprennent des évidements en forme de cône, et

dans laquelle lesdits seconds de chacun de ladite paire de moyens de positionnement comprennent des évidements coniques allongés dont l'axe longitudinal lorsqu'il est prolongé, passe adjacent audit premier coin de ladite enveloppe.

6. La disquette de la revendication 5 dans laquelle l'axe prolongé de chacun desdits seconds de ladite paire de moyens de positionnement coupe la pointe de son évidemment en forme de cône ménagé dans le côté en correspondance.

7. La disquette de la revendication 5 ou 6 dans laquelle lesdits premiers de ladite paire de moyens de positionnement sont alignés et opposés et situés sur ledit axe, et dans laquelle le prolongement dudit axe prolongé coupe la pointe commune desdits évidements en forme de cône.

8. La disquette selon l'une quelconques des revendications précédentes dans laquelle ladite enveloppe est formée de matière plastique rigide et présente un côté de l'ordre de 10 cm et une épaisseur de l'ordre de 0,05 cm.

9. La disquette selon l'une quelconque des revendications 3 à 8 dans laquelle lesdits deux bords coniques font un angle aigu de l'ordre de 15° avec les deux bords de ladite enveloppe qui se rejoignent pour former un coin de 90° audit côté opposé de ladite ouverture d'entraînement de disques disposée centralement.

10. La disquette selon l'une quelconque des revendications précédentes dans laquelle chacune desdites deux surfaces plates de ladite enveloppe comporte des repères indiquant le sens approprié d'insertion dans l'unité d'entraînement de disques, lesdits repères étant orientés suivant un angle de 90° les uns par rapport aux autres set étant dirigés vers les deux bords de ladite enveloppe qui se rejoignent pour former un coin de 90° audit premier coin de ladite enveloppe.

11. La disquette de la revendication 10 dans laquelle chacune desdites deux surfaces plates comporte des repères indiquant le côté d'utilisation, lesdits repères d'utilisation faisant un angle de 90° les uns avec les autres et étant situés sur le bord opposé de ladite enveloppe à partir de ses repères d'insertion correspondants.

FIG. 1

FIG. 2

FIG. 3

0 126 884